# EUROPEAN PATENT APPLICATION

(11) **EP 4 778 810 A1**
(43) Date of publication of application: **22.07.2026**
(21) Application number: 26150358.5
(22) Date of filing: 06.01.2026
(51) Int. Cl.: B62D 7/14

(54) **A DUAL AXLE STEERING SYSTEM FOR A VEHICLE**

(30) Priority: 15.01.2025 US 202519021563
(71) Applicant: ArvinMeritor Technology, LLC, Troy, MI 48084 (US)
(72) Inventor: BRIDGMAN, Joel, Michigan, 48324 (US); WEEKS, Aaron, Michigan, 49615 (US); NALLA, Sunil, Michigan, 48315 (US); SCHLUNDT, Michael, Michigan, 48335 (US)
(74) Representative: Anderson, Nicola Unity

(57) **Abstract**

A dual axle steering system for a vehicle, the steering system comprising a first axle and a second axle, wherein both the first axle and the second axle are steerable; a first linkage for transmitting steering motion to wheels supported on the first and second axles at a first side of said vehicle; and a second linkage for transmitting steering motion to wheels supported on the first and second axles at a second side of said vehicle. Each linkage comprises a fore tie rod for transmitting steering motion to a fore wheel supported on the first axle, an aft tie rod for transmitting steering motion to an aft wheel supported on the second axle, and a connection arrangement between the fore and aft tie rods for transmitting steering motion to the fore and aft tie rods. At least one connection arrangement is articulated.

## Description

### Technical Field

The present invention relates to a dual axle steering system for a vehicle, and to a vehicle including a dual axle steering system.

### Background

Heavy or medium duty vehicles such as trucks or off-road vehicles are known to benefit from having tandem or dual axle steering. Such an arrangement advantageously provides improved steering. Manoeuvrability of the vehicle can be improved. In addition, dual axle steering typically provides increased stability of a vehicle when turning. Weight distribution on the vehicle can be improved, and steering may be more robust.

In order to provide dual axle steering, a steering system including a mechanical linkage is commonly provided. Such a mechanical linkage connects the wheels supported on two of the vehicle axles so as to provide steering at both axles in unison. A steering input is provided via a steering wheel and steering gears.

Such a mechanical linkage is commonly constrained by the component geometry required in order to effectively provide steering at both axles from the steering input. In particular, the distance between the two axles is limited by the need to link the vehicle wheels of the first and second axles at each side of the vehicle to one another, so that steering takes place in unison. Other features of the vehicle are thus limited. For example, there may be a size limitation on door width for vehicle entry. The distance between the axles may not allow for steps into the vehicle cab to be provided.

Vehicles such as heavy duty trucks or off-road vehicles are known to have independent suspension in order to improve ride comfort, especially in an off-road environment. The design freedom for a dual axle steering system can be further constrained by the need to provide independent suspension, in contrast to a vehicle with a rigid or beam axle suspension arrangement.

The present invention seeks to mitigate the problems of the prior art.

### Summary of Invention

A first aspect of the invention provides a dual axle steering system for a vehicle, the steering system comprising a first axle and a second axle, wherein both the first axle and the second axle are steerable; a first linkage for transmitting steering motion to wheels supported on the first and second axles at a first side of said vehicle; and a second linkage for transmitting steering motion to wheels supported on the first and second axles at a second side of said vehicle. Each linkage comprises a fore tie rod for transmitting steering motion to a fore wheel supported on the first axle, an aft tie rod for transmitting steering motion to an aft wheel supported on the second axle, and a connection arrangement between the fore and aft tie rods for transmitting steering motion to the fore and aft tie rods. At least one connection arrangement is articulated.

Articulation of the connection between the fore and aft tie rods allows increased flexibility of the geometry of the steering system in comparison to a single-arm rigid connection. Due to the articulation of the connection, the length of the connection can be adjusted without the need for significant redesign of the remaining components of the steering system. This allows the length of the connection to be adapted depending on the application of the steering system. In particular, the length of the connection can be increased beyond that provided by a non-articulated connection.

Optionally, the connection arrangement of both the first and second linkages may be articulated.

Articulation of the connection between the tie rods at both sides of the steering system allows increased flexibility of the geometry of the steering system in comparison to a single-arm connection. The length of the connection is adjustable without the need for significant redesign of the remaining components of the steering system. This allows the length of the connection to be adapted depending on the application of the steering system, to suit a range of vehicles with different distances between the first and second axles. In particular, the length of the connection can be increased beyond that provided by a non-articulated connection. Longer wheelbase vehicles can thus advantageously be provided with dual axle steering.

Optionally, the first and/or second connection arrangement comprises at least two pivotable joints.

The or each connection arrangement being articulated at two points advantageously provides considerable flexibility of the geometry of the steering system whilst enabling the required transfer of steering motion.

Optionally, the first and second connection arrangements each comprise a first arm for connection to the fore tie rod; a second arm for connection to the aft tie rod; and a longitudinal drag link pivotably connected between the first arm and the second arm, such that the first and second connection arrangements further comprise a first pivotable joint between the first arm and the longitudinal drag link; and a second pivotable joint between the second arm and the longitudinal drag link.

Such an arrangement provides appropriate articulation of the connection arrangements, such that the above advantages can be realised.

Optionally, the or each first arm comprises a first pivotable joint between the first arm and the associated fore tie rod, a second pivotable joint between the first arm and the longitudinal drag link, and a steering input point configured for engagement with a steering gear, and the steering input point is located so as to form a substantially triangular arrangement with the first and second pivotable joints.

The triangular arrangement of the steering input point and the joints is compact yet effective. That is, steering motion can be transmitted efficiently, whilst at the same time the first is advantageously compact.

Optionally, the steering input point is proximal to an aft end of the first arm.

Optionally, the dual axle steering system further comprises a lateral drag link between the first connection arrangement and the second connection arrangement.

Optionally, the lateral drag link extends between the first arm of the first connection arrangement and the first arm of the second connection arrangement.

Optionally, the lateral drag link is pivotably connected to each first arm at a third pivotable joint.

Optionally, the or each first arm comprises a first pivotable joint between the first arm and the associated fore tie rod, a second pivotable joint between the first arm and the longitudinal drag link, and a steering input point configured for engagement with a steering gear, and the third pivotable joint is located aft of the first pivotable joint.

Optionally, the dual axle steering system further comprises at least one steering gear, wherein one of the first arm and the second arm of the first connection arrangement is a Pitman arm through which a steering input is directly received via the steering gear, and wherein the other of the first arm and the second arm of the first connection arrangement, and the first and second arms of the second connection arrangement, are idler arms through which a steering input is received via the longitudinal and lateral drag links.

Advantageously, a single direct steering input via a steering gear is used for the whole steering system. The number of components is thus advantageously limited.

Optionally, the dual axle steering system further comprises at least two steering gears, wherein the first arm of the first connection arrangement is a Pitman arm through which a steering input is directly received via a first steering gear, the first arm of the second connection arrangement is a Pitman arm through which a steering input is directly received via a second steering gear, and the second arms of the first and second connection arrangements are idler arms through which a steering input is received via the longitudinal drag links.

The provision of two steering gears in the steering system allows for increased steering loads whilst limiting the number of components, so that the steering system is suitable for heavier vehicles without providing unnecessary extra force.

Optionally, the dual axle steering system further comprises at least three steering gears, wherein the first arm of the first connection arrangement is a Pitman arm through which a steering input is directly received via a first steering gear, the first arm of the second connection arrangement is a Pitman arm through which a steering input is directly received via a second steering gear, the second arm of the first connection arrangement is a Pitman arm through which a steering input is directly received via a third steering gear, and the second arm of the second connection arrangement is an idler arm through which a steering input is received via the second connection arrangement longitudinal drag link.

Optionally, the dual axle steering system further comprises at least four steering gears, wherein the first arm of the first connection arrangement is a Pitman arm through which a steering input is directly received via a first steering gear, the first arm of the second connection arrangement is a Pitman arm through which a steering input is directly received via a second steering gear, the second arm of the first connection arrangement is a Pitman arm through which a steering input is directly received via a third steering gear, and the second arm of the second connection arrangement is a Pitman arm through which a steering input is directly received via a fourth steering gear.

The steering system is adaptable. The optimum number of steering gears can be used to provide steering input, so that complexity of the system is increased only where necessary, i.e. to provide the required steering load for the type of vehicle.

Optionally, the dual axle steering system further comprises a hydraulic link between the first linkage and the second linkage, wherein the hydraulic link is between two or more of the steering gears.

Optionally, the dual axle steering system further comprises a hydraulic link between the fore and aft tie rods of the first and/or second linkage.

Optionally, the dual axle steering system is configured for use with an independent suspension system.

Optionally, the first and second axles are front axles of a vehicle.

Optionally, the first and second arms are die cast.

Optionally, the first and second arms are forged.

There is also provided a vehicle comprising a dual axle steering system as set out above.

### Brief Description of Drawings

Embodiments of the invention will now be described with reference to the accompanying drawings, in which:
Figure 1 is a plan view from above of a dual axle steering system according to the present embodiment, depicted with wheels in place;
Figure 2 is a plan view from above of the steering system of Figure 1;
Figure 3 is an isometric view of the steering system of Figures 1 and 2, with wheels depicted at one side;
Figure 4 is a plan view of the underside of the steering system of Figures 1, 2 and 3;
Figure 5 is a plan view from above of a dual axle steering system according to a further embodiment, depicted with wheels; and
Figure 6 is a plan view from above of a dual axle steering system according to a further embodiment, depicted with wheels.

### Detailed description

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

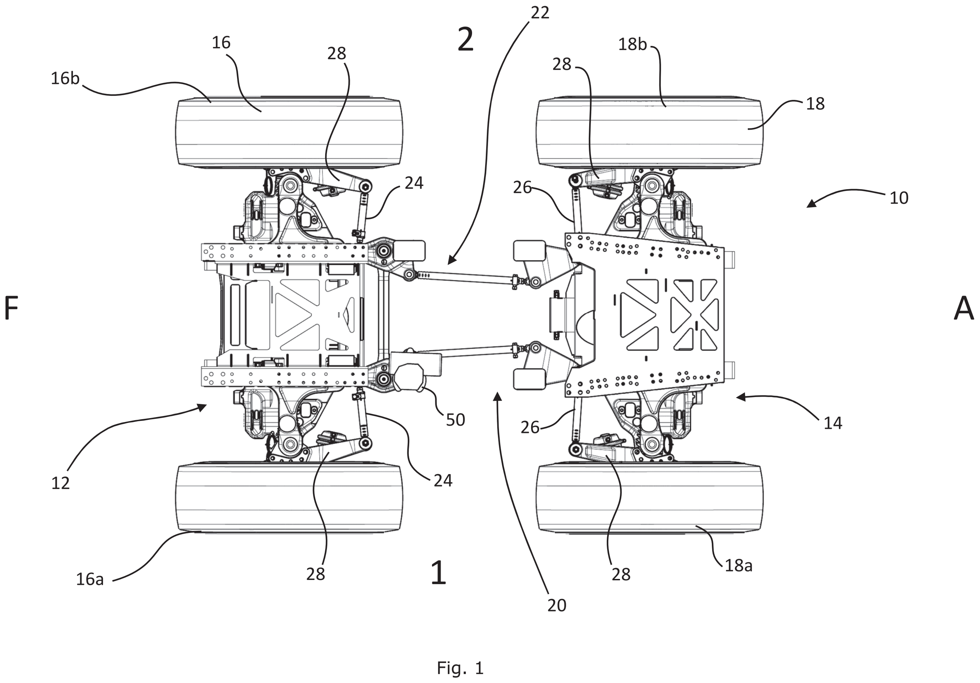

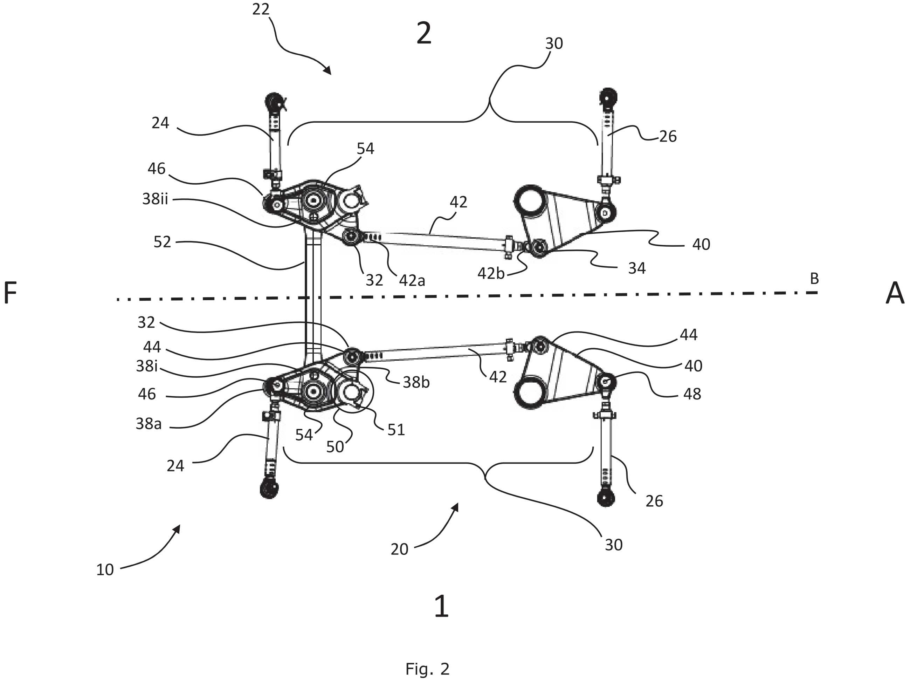

With reference to Figures 1 and 2, a dual axle steering system for a vehicle is indicated at 10. A dual axle steering system as referred to herein is considered as one in which two axles of the vehicle are steerable. That is, wheels supported on two axles can be positively steered, i.e. adjusted to a steering angle, i.e. pivoted about their supported location on the axle in order to steer the vehicle in a particular direction. The two steerable axles of the vehicle are linked to steer in unison. Such dual axle steering systems are typically found in heavy or medium duty vehicles such as trucks or off-road vehicles, and may be suitable for vehicles with independent suspension or beam axle vehicles.

Typically, a primary steering gear and an assist steering gear are hydraulically and mechanically linked to a first axle. The second axle may have further assist steering gears that are linked hydraulically and mechanically to the primary and assist steering gears of the first axle. Lateral and longitudinal drag links are used to connect the steering gears for the transmittal of steering motion therebetween.

Supporting arms known as Pitman arms and idler arms are used to connect the steering gears to the axles. In this description, the term "Pitman arm" is used to indicate an arm through which the translation of angular movement of the steer gear is translated to linear movement for steering a wheel. An "idler arm" is one where support is provided but rotary or angular motion from a steering gear is not directly transmitted.

In the described embodiment, the vehicle is not shown. However, it will be understood that the dual axle steering system 10 is suitable for use with a heavy or medium duty vehicle such as a truck or off-road vehicle. The steering system 10 has a fore F and an aft A, corresponding to the fore and aft of a vehicle. The steering system 10 has a first side 1 and a second side 2. The first side 1 corresponds to a left side of the vehicle. The second side 2 corresponds to a right side of said vehicle.

The steering system 10 includes a first axle 12 and a second axle 14. In this embodiment, the first axle 12 is a fore axle, and the second axle 14 is an aft axle. Each axle supports a pair of wheels 16, 18. The first axle 12 supports a left front wheel 16a at the first side 1, and a right front wheel 16b at the second side 2. The second axle 14 supports a left rear wheel 18a at the first side 1, and a right rear wheel 18b at the second side 2.

Each of the wheels 16a, 16b, 18a, 18b is steerably mounted on the respective axle 12, 14. That is, each of the wheels 16a, 16b, 18a, 18b can be pivoted in relation to the vehicle by the steering system 10 in order to steer the vehicle as required.

The steering system 10 includes a first linkage 20 and a second linkage 22 for the transfer of steering motion from a steering input (discussed in further detail below) to the wheels 16, 18. The first linkage 20 is for transmitting steering motion to the first side wheels 16a, 18a. The second linkage 22 is for transmitting steering motion to the second side wheels 16b, 18b.

Each linkage 20, 22 has a fore tie rod 24 and an aft tie rod 26. Steering motion is transmitted from each tie rod to a respective wheel. That is, steering motion is transmitted via the fore tie rod 24 of the first linkage 20 to the first side wheel 16a, steering motion is transmitted via the aft tie rod 26 of the first linkage 20 to the first side rear wheel 18a, and so on.

In this embodiment, each tie rod 24, 26 is connected to a respective wheel 16, 18 by means of an arm 28, such that steering motion is transmitted from each tie rod 24, 26 to the respective wheel 16, 18 through a respective arm 28.

Each linkage 20, 22 also has a link or connection arrangement 30 (see Figure 2). The connection arrangement 30 of each linkage 20, 22 connects the respective fore tie rod 24 to the aft tie rod 26. Steering motion is transmitted from said steering input to the fore and aft tie rods 24, 26 via the respective connection arrangement 30. Each connection arrangement 30 is pivotably connected to each respective fore and aft tie rod 24, 26, to facilitate the transmittal of steering motion thereto.

Each connection arrangement 30 is articulated. That is, rather than being a single fixed member, each connection arrangement 30 includes at least one joint that enables the ends of the connection arrangement 30 to move with respect to one another.

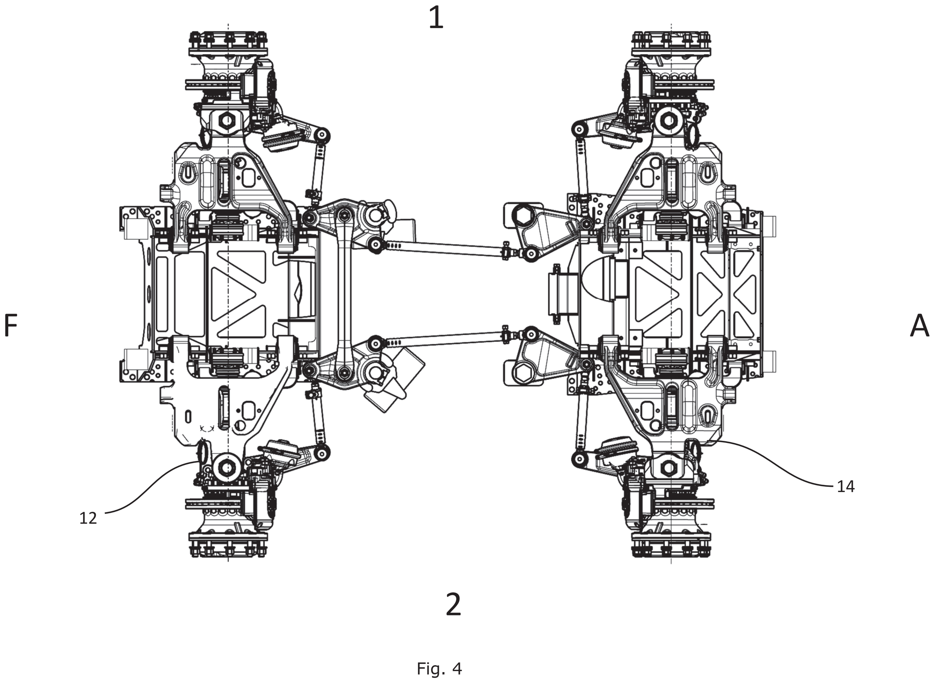

Advantageously, there is increased flexibility of the geometry of the steering system 10 due to the articulated connection arrangement 30. As the connection arrangement 30 is articulated, the length of each linkage 20, 22 can be adjusted without the need for significant redesign of the surrounding components. The distance X between the first and second axles 12, 14 (see Figure 4) is thus more easily adapted to suit a particular application or vehicle.

In this embodiment, both of the connection arrangements 30 are articulated. Both connection arrangements 30 being articulated optimises the flexibility of design, so that the distance between the first and second steerable axles 12, 14 can be set as required by the vehicle design. For example, the first and second axles 12, 14 can be spaced from one another such that the distance X allows for a step or steps leading to a driver's cab of the vehicle.

The length of the connection between a fore and aft tie rods 24, 26 can be increased in relation to a linkage with a non-articulated connection, i.e. a single member connection or a connection where the ends are fixed in relation to one another. Longer wheelbase vehicles with dual axle steering can thus be provided in comparison to vehicles with steering systems without such articulated connection arrangements 30.

In alternative embodiments, the connection arrangement 30 of only one of the linkages 20, 22 is articulated.

In this embodiment, as shown in Figure 2, each connection arrangement 30 includes two pivotable joints 32, 34. That is, each connection arrangement 30 is articulated in two locations.

In alternative embodiments, the connection arrangement 30 of each linkage 20, 22 may differ from the other in terms of the number of pivotable joints. For example, one connection arrangement 30 may be articulated in one location whilst the other is articulated in two locations. In alternative embodiments, one or each of the connection arrangements may be articulated at three or more locations, i.e. one or both the connection arrangements has three or more pivotable joints.

The steering system 10 defines a longitudinal axis B. The longitudinal axis B of the steering system 10 is substantially coaxial with a longitudinal axis of the vehicle upon which the steering system 10 is installed. That is, the longitudinal axis B extends in a fore-aft direction.

In this embodiment, each connection arrangement 30 has a first arm 38, connected to the fore tie rod 24, and a second arm 40, connected to the aft tie rod 26. The first and second arms 38, 40 are pivotably connected to one another by a longitudinal drag link 42.

The longitudinal drag link 42 is described as "longitudinal" as the drag link 42 extends in a direction substantially parallel to the longitudinal axis B, such that ends of the longitudinal drag link 42 are positioned generally fore and aft of one another. Due to movement of the steering system 10, the longitudinal drag link 42 is not fixed parallel to the longitudinal axis B, but is movable with respect to the longitudinal axis B whilst extending generally in a longitudinal direction.

Each longitudinal drag link 42 has a first end 42a and a second end 42b. The first end 42a is connected to the first arm 38 at the fore drag link pivotable joint 32. The second end 42b is connected to the second arm 40 at the aft drag link pivotable joint 34.

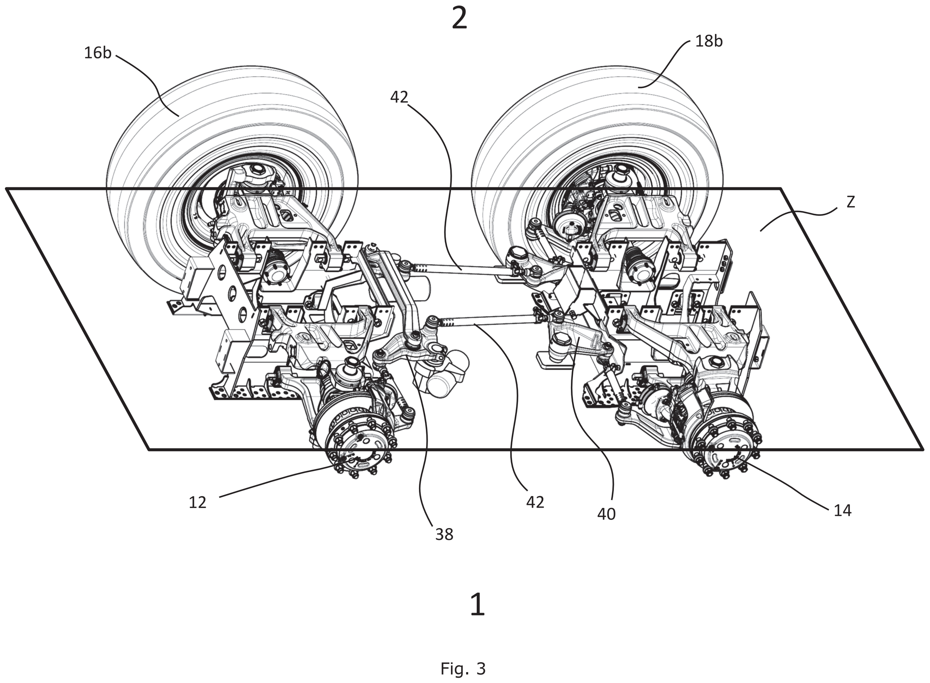

The steering system defines a plane Z extending parallel to the first and second axles 12, 14, as shown in Figure 3. That is, the plane Z extends substantially horizontally with respect to the vehicle. The pivotable joints 32, 34 are pivotable such that each linkage 20, 22 is movable whilst remaining substantially parallel to the plane Z. That is, the pivotable joints 32, 34 allow pivoting movement in two dimensions between the drag link 42 and the respective first and second arms 38, 40 whilst the drag link 42 and the first and second arms 38, 40 remain substantially parallel to the plane Z.

In this embodiment, each pivotable joint 32, 34 comprises a bolt 44 passing through corresponding apertures (not shown) defined by the longitudinal drag link 42 and the first and second arms 38, 40. Each bolt 44 defines a longitudinal axis C (see Figure 3) extending substantially transverse to the plane Z.

The arrangement of the pivotable joints 32, 34 between the longitudinal drag link 42 and the first and second arms 38, 40 provides an effective articulated connection arrangement 30 suitable for the transmittal of steering motion from a steering input to the tie rods 24, 26 and so to the wheels 16, 18. The connection arrangement 30 can provide efficient transfer of force and steering motion, whilst the articulated form of the connection arrangement provides geometric adaptability. The connection arrangement 30 being of a simple mechanical form provides ease of maintenance and advantageously limits the number of components.

Each first arm 38 is pivotably secured to the respective fore tie rod 24 at a fore tie rod joint 46. Each second arm 40 is pivotably secured to the respective aft tie rod 26 at an aft tie rod joint 48.

In this embodiment, there is a single point of steering input. As shown in Figure 1, a steering input is provided in the form of a steering gear 50 to the first linkage 20. The first arm 38 of the first linkage 20 is referred to as the first arm 38i. The first arm 38 of the second linkage 20 is referred to as the first arm 38ii. The steering gear 50 is connected to the first arm 38i of the first linkage 20 at a steering input point 51 so as to transmit steering motion to the first arm 38i and thence to the remainder of the connection arrangement 30.

The steering system 10 includes a lateral drag link 52 (see Figure 2). Steering motion is transmitted from the first linkage 20 to the second linkage 22 via the lateral drag link 52. The lateral drag link 52 extends substantially transverse to the longitudinal axis B, substantially parallel to the plane Z.

In this embodiment, the lateral drag link 52 connects each first arm 38i, 38ii of the connection arrangements 30. In this embodiment, each end of the lateral drag link 52 is pivotably secured to one of the first arms 38i, 38ii at a lateral drag link joint 54.

The lateral drag link 52 advantageously provides structural support to the steering system 10, so advantageously limits the adverse effect of uneven forces as the vehicle travels over uneven surfaces. In addition, the lateral drag link 52 aids in synchronising rotation between the first arms 38i, 38ii, improving Ackerman steering.

In use, a steering input is applied to the first arm 38i of the first linkage 20 via the steering gear 50. The first arm 38i is turned by the steering gear 50, such that steering motion is transmitted to the first arm 38ii of the second linkage 22. The fore tie rod 24 at the first side 1 acts to turn the wheel 16a at the same time as the fore tie rod 24 at the second side 2 acts in unison to turn the wheel 16b by the same amount and in the same direction.

As well as the lateral drag link 52 providing a connection between the first and second linkages 20, 22 in order to transmit steering motion from one to the other, the linkages 20, 22 are hydraulically linked.

Steering motion is transmitted from each of the first arms 38 to the respective second arms 40 via the longitudinal drag links 42. Steering motion is then transmitted to the respective aft tie rods 26, and thence to the rear wheels 18a, 18b.

In this embodiment, where a single steering input is provided in the form of the steering gear 50, the first arm 38 of the first linkage 20 acts as a Pitman arm, whilst the first arm 38 of the second linkage 20 acts as an idler arm.

As shown in Figure 2, in this embodiment, the fore drag link pivotable joint 32, the fore tie rod joint 46 and the steering input point 51 are arranged in a substantially triangular formation. Such a formation allows steering motion to be transmitted effectively whilst allowing the first arm 38 to be advantageously compact. In alternative embodiments, the joints are arranged in some other suitable formation.

In this embodiment, each first arm 38 is substantially triangular in shape. In alternative embodiments, each first arm is of some other suitable shape where the joints can be located in a required formation.

In this embodiment, the fore tie rod joint 46 is proximal a fore end 38a of the first arm 38 of the first linkage 20. The steering input point 51 is proximal an aft end 38b of the first arm 38 of the first linkage 20.

In this embodiment, the lateral drag link joint 54 is located substantially between the fore tie rod joint 46 and the steering gear 50. Such an arrangement allows the effective transmittal of steering motion from the first linkage 20 to the second linkage 22 whilst providing an advantageously compact first arm 38. In alternative embodiments, the joint 54 is located in some other suitable location.

Advantageously, the arrangement described above, a single steering gear 50 is used to steer the vehicle. Limiting the number of steering inputs steering gears required advantageously limits the number of components. The steering system 10 is adaptable to a vehicle, e.g. a medium duty vehicle, where a relatively lower steering force is required.

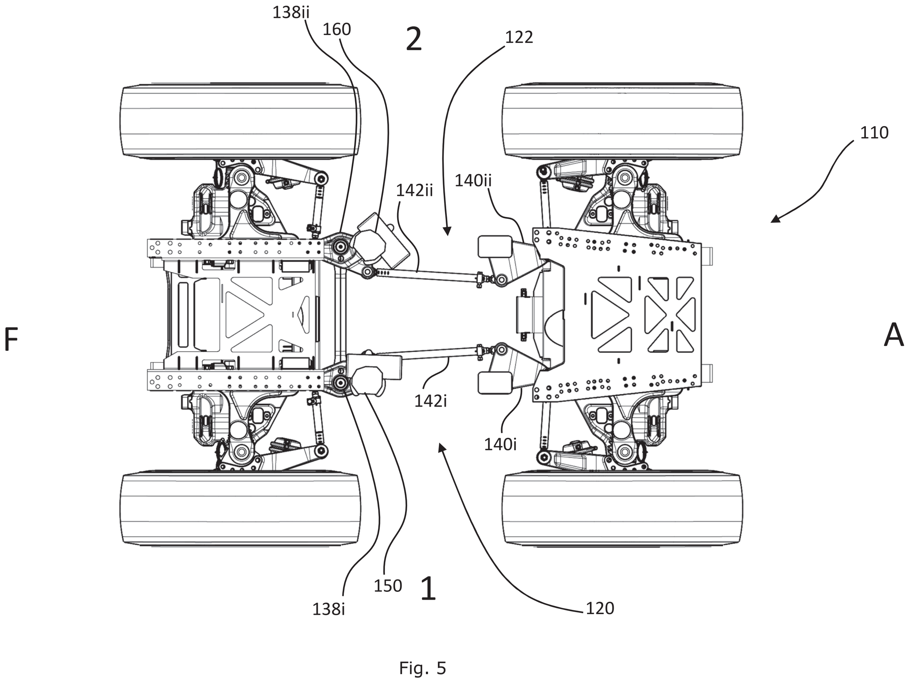

With reference now to Figure 5, a steering system according to a second embodiment is indicated at 110. Only those features that differ from those of the steering system 10 of the first embodiment are described in detail. Corresponding reference numbers to those of the previous embodiment have been used, with the addition of a preceding "1".

In this embodiment, the steering system 110 includes two steering inputs. A first steering input is provided in the form of a first steering gear 150, connected to the first arm 138i of the first linkage 120. A second steering input is provided in the form of a second steering gear 160, connected to the first arm 138ii of the second linkage 122. Steering motion is transmitted from the first steering gear 150 to the first arm 138i, and thence to the second arm 140i via the longitudinal drag link 142i of the first linkage 120. In the second linkage 122, steering motion is transmitted from the second steering gear 160 to the first arm 138ii and thence to the second arm 140ii by the longitudinal drag link 142ii of the second linkage 122.

In this embodiment, both first arms 138i, 138ii act as Pitman arms. Both second arms 140i, 140ii are idler arms.

In this embodiment, the first arms 138i, 138ii are hydraulically connected via the steering gears 150, 160.

This embodiment demonstrates the adaptability of the steering system 110. Two steering gears 150, 160 can be used with very little adaptation of the steering system linkages 120, 122, for a vehicle where an increased steering load may be required.

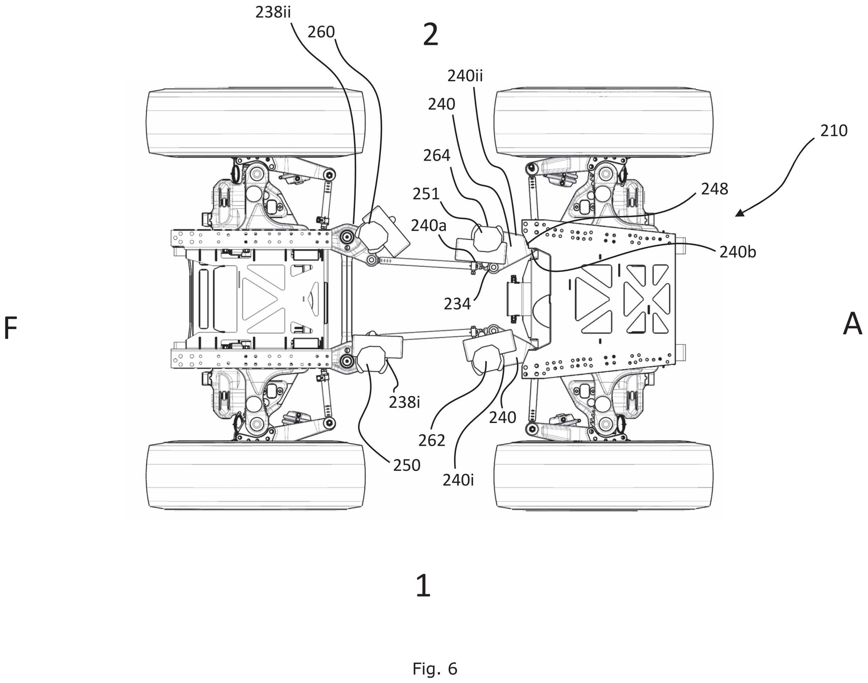

Figure 6 shows a steering system according to a third embodiment, indicated at 210. Only those features that differ from those of the previous embodiments are described in detail. Corresponding reference numbers to those of the previous embodiment have been used, with the addition of a preceding "2".

In this embodiment, the steering system 210 has four steering inputs. Four steering gears 250, 260, 262, 264 are provided. As in the previous embodiment, a first steering gear 250 and a second steering gear 260 are connected to the first arms 238i, 238ii respectively. In addition, the first and second steering gears 250, 260 are hydraulically connected. In this embodiment, the steering system 210 has a third steering gear 262 connected to the second arm 240a, for the transmittal of steering motion thereto. There is also included a fourth steering gear 264 connected to the second arm 240b, for the transmittal of steering motion thereto.

In this embodiment, the first arms 238i, 238ii and the second arms 240a, 240b act as Pitman arms.

Such an embodiment, with four steering gears, is suitable for a heavier duty vehicle where a relatively greater steering load is required.

In this embodiment, the aft drag link pivotable joint 234, the aft tie rod joint 248 and the steering input point 251 of each second arm 240 are arranged in a substantially triangular formation. Such a formation allows steering motion to be transmitted effectively whilst allowing the first arm 38 to be advantageously compact. In alternative embodiments, the joints are arranged in some other suitable formation.

In this embodiment, each second arm 240 is substantially triangular in shape. In alternative embodiments, each first arm is of some other suitable shape where the joints can be located in a required formation.

In this embodiment, the aft tie rod joint 248 is proximal an aft end 240b of the second arm 240. The steering input point 251 is proximal a fore end 240a of the second arm 240.

In an alternative embodiment, the steering system has three steering inputs. Three steering gears are provided. In such an embodiment, two steering gears may be provided at the front axle, and one steering gear at the rear axle, or vice versa.

The first and second arms 38, 40, 138, 140, 238, 240 are in this embodiment cast or forged. In alternative embodiments, the first and second arms are manufactured by some other suitable means.

## Claims

1. A dual axle steering system for a vehicle, the steering system comprising:
a first axle and a second axle, wherein both the first axle and the second axle are steerable;
a first linkage for transmitting steering motion to wheels supported on the first and second axles at a first side of said vehicle; and
a second linkage for transmitting steering motion to wheels supported on the first and second axles at a second side of said vehicle;
wherein each linkage comprises a fore tie rod for transmitting steering motion to a fore wheel supported on the first axle, an aft tie rod for transmitting steering motion to an aft wheel supported on the second axle, and a connection arrangement between the fore and aft tie rods for transmitting steering motion to the fore and aft tie rods; and
wherein at least one connection arrangement is articulated.

2. The dual axle steering system of claim 1, wherein each of said first and second connection arrangements is articulated.

3. The dual axle steering system of claim 1 or claim 2, wherein the first and/or second connection arrangement comprises at least two pivotable joints.

4. The dual axle steering system of claim 3, wherein the first and second connection arrangements each comprise:
a first arm for connection to the fore tie rod;
a second arm for connection to the aft tie rod; and
a longitudinal drag link pivotably connected between the first arm and the second arm, such that the first and second connection arrangements further comprise:
a first pivotable joint between the first arm and the longitudinal drag link; and
a second pivotable joint between the second arm and the longitudinal drag link;
optionally wherein the first and second arms are die cast, or wherein the first and second arms are forged.

5. The dual axle steering system of claim 4, wherein the or each first arm comprises a first pivotable joint between the first arm and the associated fore tie rod, a second pivotable joint between the first arm and the longitudinal drag link, and a steering input point configured for engagement with a steering gear, and wherein the steering input point is located so as to form a substantially triangular arrangement with the first and second pivotable joints; optionally wherein the steering input point is proximal to an aft end of the first arm.

6. The dual axle steering system of claim 4 or claim 5, further comprising a lateral drag link between the first connection arrangement and the second connection arrangement; optionally wherein the lateral drag link extends between the first arm of the first connection arrangement and the first arm of the second connection arrangement; optionally wherein the lateral drag link is pivotably connected to each first arm at a third pivotable joint.

7. The dual axle steering system of claim 6, wherein the or each first arm comprises a first pivotable joint between the first arm and the associated fore tie rod, a second pivotable joint between the first arm and the longitudinal drag link, and a steering input point configured for engagement with a steering gear, and wherein the third pivotable joint is located aft of the first pivotable joint.

8. The dual axle steering system of any one of claims 4 to 7, further comprising at least one steering gear, wherein one of the first arm and the second arm of the first connection arrangement is a Pitman arm through which a steering input is directly received via the steering gear, and wherein the other of the first arm and the second arm of the first connection arrangement, and the first and second arms of the second connection arrangement, are idler arms through which a steering input is received via the longitudinal and lateral drag links.

9. The dual axle steering system of any one of claims 4 to 7, further comprising at least two steering gears, wherein the first arm of the first connection arrangement is a Pitman arm through which a steering input is directly received via a first steering gear, the first arm of the second connection arrangement is a Pitman arm through which a steering input is directly received via a second steering gear, and the second arms of the first and second connection arrangements are idler arms through which a steering input is received via the longitudinal drag links.

10. The dual axle steering system of any one of claims 4 to 7, further comprising at least three steering gears, wherein the first arm of the first connection arrangement is a Pitman arm through which a steering input is directly received via a first steering gear, the first arm of the second connection arrangement is a Pitman arm through which a steering input is directly received via a second steering gear, the second arm of the first connection arrangement is a Pitman arm through which a steering input is directly received via a third steering gear, and the second arm of the second connection arrangement is an idler arm through which a steering input is received via the second connection arrangement longitudinal drag link.

11. The dual axle steering system of any one of claims 4 to 7, further comprising at least four steering gears, wherein the first arm of the first connection arrangement is a Pitman arm through which a steering input is directly received via a first steering gear, the first arm of the second connection arrangement is a Pitman arm through which a steering input is directly received via a second steering gear, the second arm of the first connection arrangement is a Pitman arm through which a steering input is directly received via a third steering gear, and the second arm of the second connection arrangement is a Pitman arm through which a steering input is directly received via a fourth steering gear.

12. The dual axle steering system according to any one of claims 9 to 11, further comprising a hydraulic link between the first linkage and the second linkage, wherein the hydraulic link is between two or more of the steering gears.

13. The dual axle steering system according to any preceding claim, further comprising a hydraulic link between the fore and aft tie rods of the first and/or second linkage; and/or wherein the dual axle steering system is configured for use with an independent suspension system.

14. The dual axle steering system according to any preceding claim, wherein the first and second axles are front axles of a vehicle.

15. A vehicle comprising a dual axle steering system according to any one of claims 1 to 14.
